(19) Europäisches Patentamt
European Patent Office
Office européen des brevets

(11) **EP 4 564 217 A1**

(12) **EUROPEAN PATENT APPLICATION**
published in accordance with Art. 153(4) EPC

(43) Date of publication:
04.06.2025 Bulletin 2025/23

(21) Application number: 23934892.3

(22) Date of filing: 22.09.2023

(51) International Patent Classification (IPC):
*G06F 30/20* (2020.01)

(52) Cooperative Patent Classification (CPC):
Y02T 10/72

(86) International application number:
PCT/CN2023/120813

(87) International publication number:
WO 2024/221723 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.04.2023 CN 202310478065

(71) Applicant: Deepal Automobile Technology Co.,
Ltd.
Chongqing 401133 (CN)

(72) Inventors:
• CHEN, Fu
Chongqing 401135 (CN)
• ZHANG, Yang
Chongqing 401135 (CN)
• PENG, Qianlei
Chongqing 401135 (CN)
• LU, Guocheng
Chongqing 401135 (CN)
• XU, Peng
Chongqing 401135 (CN)

(74) Representative: Potter Clarkson
Chapel Quarter
Mount Street
Nottingham NG1 6HQ (GB)

(54) **OIL TEMPERATURE ESTIMATION METHOD AND APPARATUS FOR OIL-COOLED ELECTRIC DRIVE SYSTEM, VEHICLE AND STORAGE MEDIUM**

(57) Provided is an oil-cooled electric drive system. In particular, an oil temperature estimation method and apparatus for the oil-cooled electric drive system, a vehicle, and a storage medium are provided. The oil temperature estimation method includes: obtaining a rotation speed of an oil pump in real time. When the rotation speed of the oil pump is smaller than a predetermined threshold, a motor temperature and an oil temperature estimation result of a previous moment are obtained in real time and the obtained motor temperature and the obtained oil temperature estimation result of the previous moment into a first estimation model constructed are inputted based on a heat transfer model, to obtain an oil temperature estimation result of the oil-cooled electric drive system. When the rotation speed of the oil pump is greater than or equal to the predetermined threshold, a voltage of the oil pump and a current of the oil pump are obtained in real time and the obtained voltage of the oil pump, the obtained current of the oil pump, and the rotation speed of the oil pump are inputted into a second estimation model constructed based on operation performance of the oil pump and flow resistance characteristics of an oil circuit, to obtain the oil temperature estimation result of the oil-cooled electric drive system. This method can accurately estimate an oil temperature of the oil-cooled electric drive system in real time, effectively replace an oil temperature sensor, and thus reduce a cost of the oil-cooled electric drive system.

FIG. 1

**Description**

## CROSS-REFERENCE TO RELATED APPLICATION

This application is based on and claims priority to Chinese patent application No. 202310478065.6, filed on April 28, 2023, the entire contents of which are incorporated herein by reference.

## TECHNICAL FIELD

The present disclosure relates to an oil-cooled electric drive system, and in particular to an oil temperature estimation method and apparatus for an oil-cooled electric drive system, a vehicle, and a storage medium.

## BACKGROUND

For an oil-cooled electric drive system, lubricating oil not only needs to lubricate gears and bearings, but also needs to cool heat-generating components inside the electric drive system. When an oil temperature is too low, viscosity of the oil is significantly increased, leading to increased frictional losses in mechanical components, thereby reducing an efficiency of the oil-cooled electric drive system. When the oil temperature is too high, a cooling effect is diminished, leading to overheating of internal components of the oil-cooled electric drive system, and more seriously, leading to damage of the components due to the over-temperature. Therefore, in order to ensure efficient and reliable operation of the oil-cooled electric drive system, it is necessary to monitor the oil temperature of the oil-cooled electric drive system in real time.

Existing oil-cooled electric drive system generally includes an oil pump, an oil cooler, and an oil passage structure. The oil pump provides a power for flowing of oil. The oil cooler cools the lubricating oil. Some oil-cooled systems also include a filter to filter impurities. In order to monitor the oil temperature in real time, the existing oil-cooled electric drive system is generally provided with an oil temperature sensor, which, however, can increase a cost of the oil-cooled electric drive system. Real-time estimation of the oil temperature implemented through algorithm can replace a function of the oil temperature sensor, which makes the cost of oil-cooled electric drive system more competitive.

CN202011374193.9 provides an oil temperature estimation method based on electrical characteristics of an oil pump motor, which adjusts an output rotation speed of the oil pump motor to a lowest operation rotation speed. The oil temperature of the lubricating oil is adjusted to a lowest operation temperature and a corresponding current is recorded. The oil temperature according to a temperature rise step is raised, a current corresponding to each oil temperature is sequentially obtained until the oil temperature rises to a highest operation temperature, a mapping relationship between the oil temperature and a current of the oil pump motor at the lowest operation rotation speed is obtained, and a calculation formula of the oil temperature and the oil pump motor current at the lowest operation rotation speed is obtained. According to a rotation speed increase step, the output rotation speed is gradually increased until the highest operation rotation speed is reached, and a mapping relationship between the oil temperature and the motor current at each output rotation speed is recorded, and calculation formula of the oil temperature and the current of the oil pump motor at each output rotation speed is obtained. The advantage is that by using the oil temperature estimation method, the oil temperature can be obtained, reducing costs and a hardware failure rate and avoiding an inaccurate acquisition of the oil temperature data due to oil temperature sensor failures in the related art. However, when this scheme is applied to oil temperature estimation of the oil-cooled electric drive system, there are following problems: ① Without considering an influence of oil pump voltage, power supply of the oil pump on a whole vehicle mainly comes from DCDC and batteries, and a normal operation voltage can change between 9V and 16V, which can cause a corresponding relationship between the oil temperature, the oil pump rotation speed, and the oil pump current to change, and greatly reduce accuracy of estimation; ② Calibration tests can only determine a corresponding relationship between an oil temperature and a current of the oil pump motor at a typical oil pump operation rotation speed, but does not involve an oil temperature estimation method for a non-typical oil pump operation rotation speed; ③ This estimation method can only realize estimation of the oil temperature when the oil pump operates normally. In situations where the oil temperature is low, and the oil pump cannot operate, the estimation of the oil temperature cannot be realized in this case.

CN202010511132.6 provides a transmission control method and an automobile transmission. The transmission control method includes an oil temperature estimation operation mode. The oil temperature estimation operation mode includes: a-1: controlling a hydraulic system of the transmission to allow a hydraulic load in the transmission to reach a predetermined measurement load and maintain a predetermined measurement duration; a-2: controlling an electronic oil pump to operate at a reference rotation speed, measuring a motor current value of the electronic oil pump at the reference rotation speed, and querying a lookup table of a current-rotation speed-oil temperature correspondence, and based on the measured motor current value and the reference rotation speed, obtaining an transmission oil temperature. This method solves a problem that hydraulic control of the transmission cannot be carried out normally after failure of the transmission temperature sensor, which leads to failure of the transmission. By estimating the transmission oil temperature more accurately through the electric oil pump's current, continued precise control of the entire transmission hydraulic system can be supported, enhancing robustness of the transmission control. The transmission control method provided by this solution includes the oil temperature estimation operation mode, which involves measuring the motor current value of the electric oil pump at the reference speed and querying the lookup table of the current-rotation speed-oil temperature correspondence. The transmission oil temperature is determined based on the measured motor current value and the reference rotation speed. This solution is similar to the method adopted in CN202011374193.9, which estimates the oil temperature by looking up tables. However, the aforementioned issues remain.

## SUMMARY

The present disclosure aims to provide an oil temperature estimation method and apparatus for an oil-cooled electric drive system, a vehicle, and a storage medium. This method can accurately estimate an oil temperature in real time, effectively replacing the function of the oil temperature sensor, thereby reducing the cost of an oil-cooled electric drive system.

To achieve the above object, technical solution adopted by the present disclosure is as follows.

In a first aspect, an oil temperature estimation method for an oil-cooled electric drive system is provided according to the present disclosure. The oil temperature estimation method includes: obtaining a rotation speed of an oil pump in real time, when the rotation speed of the oil pump is smaller than a predetermined threshold, obtaining a motor temperature and an oil temperature estimation result of a previous moment in real time and inputting the obtained motor temperature and the obtained oil temperature estimation result of the previous moment into a first estimation model constructed based on a heat transfer model, to obtain an oil temperature estimation result of the oil-cooled electric drive system; and when the rotation speed of the oil pump is greater than or equal to the predetermined threshold, obtaining a voltage of the oil pump and a current of the oil pump in real time and inputting the obtained voltage of the oil pump, the obtained current of the oil pump, and the rotation speed of the oil pump into a second estimation model constructed based on operation performance of the oil pump and flow resistance characteristics of an oil circuit, to obtain the oil temperature estimation result of the oil-cooled electric drive system.

Further, the first estimation model is: $T_{oilt} = \alpha T_{oilt-1} + (1 - \alpha)T_{motor}$, where $T_{oilt}$ is the oil temperature estimation result at a current moment $t$, $\alpha$ is a proportionality coefficient ranging from 0 to 1, $T_{motor}$ is the motor temperature, and $T_{oilt-1}$ is the oil temperature estimation result of the previous moment, when the previous moment is an initial moment, the oil temperature estimation result $T_{oilt-1}$ of the previous moment is an ambient temperature.

Further, the proportionality coefficient $\alpha$ is obtained through experimental calibration.

Further, the second estimation model is: $T_{oil} = f(X_1, X_2)$, $X_1 = f(n, n_{ref})$, and $X_2 = f(n, U, I, \beta)$, where $T_{oil}$ is the oil temperature estimation result, $X_1$ is a first input variable, $X_2$ is a second input variable, $n$ is a real-time rotation speed of the oil pump, $n_{ref}$ is a reference rotation speed of the oil pump which is reasonably set as desired, $U$ is the voltage of the oil pump, $I$ is the current of the oil pump, and $\beta$ is a calibration correction factor.

Further, a calculation formula for the first input variable is:
$$X_1 = f(n, n_{ref}) = \frac{n}{n_{ref}}$$
.

Further, a calculation formula for the second input variable is:
$$X_2 = f(n, U, I, \beta) = \frac{U * I}{n^\beta}$$
.

Further, the oil temperature estimation method includes: performing a filtering process and an amplitude limiting process on the obtained oil temperature estimation result of the oil-cooled electric drive system. The filtering processing outputs once every $m$ calculation cycles, the outputted value being an average value of estimation results in the $m$ cycles; and an amplitude limiting coefficient for the amplitude limiting processing is obtained through testing.

Further, the first estimation model is constructed by: S11, determining several test operation conditions for the oil-cooled electric drive system; S12, mounting an oil temperature sensor in the oil circuit of the oil-cooled electric drive system, and operating the oil-cooled electric drive system according to the test operation conditions, and continuously recording data during operation, the data including the motor temperature, the oil temperature estimation result of the previous moment, and oil temperature information acquired by the oil temperature sensor; S13, repeating the step S12 until data recording under all test operation conditions is completed; and S14, constructing a fitted regression model with taking the motor temperature and the oil temperature estimation result of the previous moment as inputs and taking the oil temperature information acquired by the oil temperature sensor as output, to obtain the first estimation model.

Further, the second estimation model is constructed by: S21, determining a lowest operating oil temperature of the oil pump of the oil-cooled electric drive system as a starting oil temperature for each experiment operation condition; S22, determining several experiment operation conditions of the oil-cooled electric drive system based on losses of the electric drive system, at least one of the several experiment operation conditions including a maximum loss point of the oil-cooled electric drive system in continuous operation; S23, adjusting an supply voltage of the oil pump to a lowest operating voltage, requesting the rotation speed of the oil pump to be a predetermined rotation speed, controlling the oil-cooled electric drive system not to operate, adjusting the supply voltage of the oil pump to increase from a lowest voltage to a highest voltage in accordance with a predetermined gradient after the system is stable, and continuously recording data during operation, the data including the voltage of the oil pump, the current of the oil pump, the rotation speed of the oil pump, and an oil temperature acquired by the oil temperature sensor; S24, controlling the oil-cooled electric drive system to operate in one experiment operation condition of the several experiment operation conditions, adjusting the supply voltage of the oil pump to decrease from the highest voltage to the lowest voltage in accordance with the predetermined gradient after the oil-cooled electric drive system is stable, and continuously recording data during operation, the data including the voltage of the oil pump, the current of the oil pump, the rotation speed of the oil pump, and the oil temperature acquired by the oil temperature sensor; S25, repeating the step S23 and the step S24 until data recording under all experiment operation conditions is completed; and S26, constructing a fitted regression model with taking the voltage of the oil pump, the current of the oil pump, and the rotation speed of the oil pump as inputs and taking oil temperature information acquired by the oil temperature sensor as an output, to obtain the second estimation model.

In a second aspect, an oil temperature estimation apparatus for an oil-cooled electric drive system is provided according to the present disclosure, being capable of performing the oil temperature estimation method according to the present disclosure. The apparatus includes: an information obtaining module configured to obtain parameter information, the parameter information including the rotation speed of the oil pump, the voltage of the oil pump, the current of the oil pump, the motor temperature, and the oil temperature estimation result of the previous moment; and an information processing module configured to calculate, based on the parameter information obtained by the information obtaining module, the oil temperature estimation result of the oil-cooled electric drive system based on the predetermined first estimation model or the predetermined second estimation model.

In a third aspect, a vehicle is provided according to the present disclosure. The vehicle includes an oil-cooled electric drive system. The oil-cooled electric drive system includes the oil temperature estimation apparatus for the oil-cooled electric drive system according to the present disclosure.

In a fourth aspect, a storage medium is provided according to the present disclosure. The storage medium has a computer-readable program stored therein, the computer-readable program being capable of, when invoked, implementing the oil temperature estimation method for the oil-cooled electric drive system according to the present disclosure.

Compared with the related art, the present disclosure provides the following advantageous effects.

1. The present disclosure uses different estimation models based on the obtained rotation speed of the oil pump in real time. When the rotation speed of the oil pump is smaller than the predetermined threshold, the first estimation model constructed based on the heat transfer model is used to obtain the oil temperature estimation result of the oil-cooled electric drive system. When the rotation speed of the oil pump is greater than or equal to the predetermined threshold, the second estimation model constructed based on the operation performance of the oil pump and the flow resistance characteristics of the oil circuit is used to obtain the oil temperature estimation result of the oil-cooled electric drive system, which improves accuracy of estimation results and broadens applicability.

2. Data required for oil temperature estimation in this disclosure are all obtained from the existing oil-cooled electric drive system. By using oil temperature estimation algorithm, which involves constructing the first estimation model and the second estimation model, the oil temperature sensor is replaced, reducing the cost of the oil-cooled electric drive system.

3. The first estimation model in this disclosure is constructed based on the motor temperature and the oil temperature estimation result of the previous moment, while the second estimation model is constructed based on the voltage of the oil pump, the current of the oil pump, and the rotation speed of the oil pump. Compared to the related art, a dimension of the voltage of the oil pump is added and a multi-factor response surface model is constructed. Unlike a single-variable interpolation method used in the related art, this method incorporates interactions between different factors, resulting in higher precision in estimation results.

## BRIEF DESCRIPTION OF DRAWINGS

To describe technical solutions in specific embodiments of the present disclosure or in the related art more clearly, the drawings to be used in the description of the specific embodiments or the related art will be briefly introduced below. Obviously, the drawings in the following description are only some embodiments of the present disclosure.

FIG. 1 is a flowchart illustrating an oil temperature estimation method for an oil-cooled electric drive system according to a first embodiment of the present disclosure.
FIG. 2 is a flowchart illustrating a method for constructing a first estimation model according to the present disclosure.
FIG. 3 is a flowchart illustrating a method for constructing a second estimation model according to the present disclosure.
FIG. 4 is a schematic diagram of a second estimation model according to the present disclosure.

FIG. 5 is a flowchart illustrating an oil temperature estimation method for an oil-cooled electric drive system according to a fourth embodiment of the present disclosure.

## DESCRIPTION OF EMBODIMENTS

Embodiments of the present disclosure will be described below with reference to the accompanying drawings and preferred embodiments, and other advantages and effects of the present disclosure will be readily apparent to those skilled in the art from the disclosure herein. The present disclosure can also be implemented or applied by other different specific embodiments, and various details in this specification can also be modified or changed based on different viewpoints and applications without departing from the spirit of the present disclosure. It should be understood that preferred embodiments are merely for illustration of the present disclosure and are not intended to limit the scope of protection of the present disclosure.

It should be noted that the drawings provided in the following examples illustrate a basic concept of the present disclosure only in a schematic manner, and only components related to the present disclosure are shown in the drawings, but are not drawn according to a number, a shape, and a dimension of the components in actual implementation. During actual implementation, the type, a variable, and a proportion of each component can be arbitrarily changed, and a layout pattern of the component may also be more complicated.

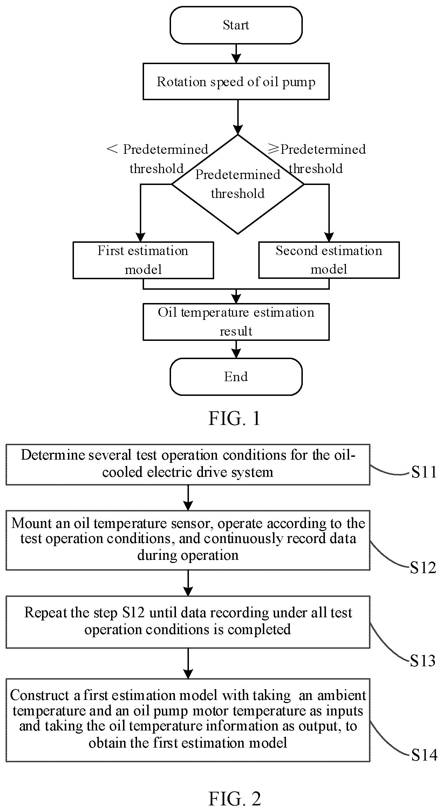

First Embodiment: as illustrated in FIG. 1, an oil temperature estimation method for an oil-cooled electric drive system is provided. The method includes: obtaining a rotation speed of an oil pump in real time. When the rotation speed of the oil pump is smaller than a predetermined threshold, a motor temperature and an oil temperature estimation result of a previous moment in real time are obtained and the obtained motor temperature and the obtained oil temperature estimation result of the previous moment are inputted into a first estimation model constructed based on a heat transfer model, to obtain an oil temperature estimation result of the oil-cooled electric drive system. When the rotation speed of the oil pump is greater than or equal to the predetermined threshold, a voltage of the oil pump and a current of the oil pump are obtained in real time and the obtained voltage of the oil pump, the obtained current of the oil pump, and the rotation speed of the oil pump are inputted into a second estimation model constructed based on operation performance of the oil pump and flow resistance characteristics of an oil circuit, to obtain the oil temperature estimation result of the oil-cooled electric drive system. In this embodiment, the predetermined threshold is set as 500rpm.

The present disclosure uses different estimation models based on the obtained rotation speed of the oil pump in real time. When the rotation speed of the oil pump is smaller than the predetermined threshold, the first estimation model constructed based on the heat transfer model is used to obtain the oil temperature estimation result of the oil-cooled electric drive system. When the rotation speed of the oil pump is greater than or equal to the predetermined threshold, the second estimation model constructed based on the operation performance of the oil pump and the flow resistance characteristics of the oil circuit is used to obtain the oil temperature estimation result of the oil-cooled electric drive system, which improves accuracy of estimation results and broadens applicability.

Data required for oil temperature estimation in this disclosure are all obtained from the existing oil-cooled electric drive system. By using oil temperature estimation algorithm, which involves constructing the first estimation model and the second estimation model, the oil temperature sensor is replaced, reducing a cost of the oil-cooled electric drive system.

The first estimation model in this disclosure is constructed based on the motor temperature and the oil temperature estimation result of the previous moment, while the second estimation model is constructed based on the voltage of the oil pump, the current of the oil pump, and the rotation speed of the oil pump. Compared to the related art, a dimension of the voltage of the oil pump is added and a multi-factor response surface model is constructed. Unlike a single-variable interpolation method used in the related art, this method incorporates interactions between different factors, resulting in higher precision in estimation results.

In the first estimation model, an estimation model is established based on a heat transfer theory. The change in oil temperature is related to a heat exchange capability between oil and a motor, and a temperature difference between the motor and the oil. The heat exchange capability between the oil and the motor is related to a structure of the oil circuit, which does not change significantly during operation of the electric drive system and can be obtained through experimental calibration. Therefore, a functional relationship between the oil temperature and the motor temperature can be established.

In the second estimation model, the estimation model is established based on electrical characteristics and oil circuit characteristics of an electronic oil pump. An input power of the electronic oil pump is related to an input voltage and an input current, and an output power is related to a flow rate of an oil medium and flow resistance of the oil circuit. The input power can be expressed as: $P_{in} = U * I$, where $U$ is an input voltage of the oil pump and $I$ is an input current of the oil pump.

The output power can be expressed as: $P_{out} = \dfrac{Q * \Delta P}{60}$, where $Q$ is an oil flow, and $\Delta P$ is a pressure difference between an inlet of the oil pump and an outlet of the oil pump. The oil flow is related to a rotation speed of the electronic oil pump and can be expressed as: $Q = V_t * \eta_v * n$, where $V_t$ is a theoretical displacement of the oil pump, $\eta_v$ is a volumetric efficiency of the oil pump, and n is the rotation speed of the oil pump. Therefore, a functional relationship between the oil temperature, the rotation speed of the oil pump, the voltage of the oil pump, and the current of the oil pump can be established.

As a preferred embodiment of the present embodiment, the first estimation model is: $T_{oil_t} = \alpha T_{oil_{t-1}} + (1 - \alpha)T_{motor}$, where $T_{oil_t}$ is the oil temperature estimation result at a current moment $t$, $\alpha$ is a proportionality coefficient ranging from 0 to 1, $T_{motor}$ is the motor temperature, and $T_{oil_{t-1}}$ is the oil temperature estimation result of the previous moment, when the previous moment is an initial moment, the oil temperature estimation result $T_{oil_{t-1}}$ of the previous moment is an ambient temperature.

In this embodiment, the proportionality coefficient $\alpha$ is determined as 0.5 through experimental calibration. If the value is 0.5, when the obtained oil temperature estimation result $T_{oil_{t-1}}$ of the previous moment is 20°C, the motor temperature $T_{motor}$ is 40°C, an oil temperature of the oil-cooled electric drive system in this case is obtained by the first estimation model as follows:

$$T_{oil_t} = 0.5 \times 20 + （1 - 0.5） \times 40 = 30℃$$

.

As a preferred embodiment of the present embodiment, the second estimation model is: $T_{oil} = f(X_1, X_2)$, $X_1 = f(n, n_{ref})$, and $X_2 = f(n, U, I, \beta)$, where $T_{oil}$ is the oil temperature estimation result, $X_1$ is a first input variable, $X_2$ is a second input variable, $n$ is a real-time rotation speed of the oil pump, $n_{ref}$ is a reference rotation speed of the oil pump which is reasonably set as desired, $U$ is the voltage of the oil pump, $I$ is the current of the oil pump, and $\beta$ is a calibration correction factor. A calculation formula for the first input variable is: $X_1 = f(n, n_{ref}) = \dfrac{n}{n_{ref}}$. A calculation formula for the second input variable is: $X_2 = f(n, U, I, \beta) = \dfrac{U * I}{n^\beta}$.

Second Embodiment: an oil temperature estimation method for the oil-cooled electric drive system is provided. The method includes: obtaining the rotation speed of the oil pump in real time. When the rotation speed of the oil pump is smaller than the predetermined threshold, the motor temperature and the oil temperature estimation result of the previous moment in real time are obtained and the obtained motor temperature and the obtained oil temperature estimation result of the previous moment are inputted into the first estimation model constructed based on the heat transfer model, to obtain the oil temperature estimation result of the oil-cooled electric drive system. When the rotation speed of the oil pump is greater than or equal to the predetermined threshold, the voltage of the oil pump and the current of the oil pump are obtained in real time and the obtained voltage of the oil pump, the obtained current of the oil pump, and the rotation speed of the oil pump are inputted into the second estimation model constructed based on the operation performance of the oil pump and the flow resistance characteristics of the oil circuit, to obtain the oil temperature estimation result of the oil-cooled electric drive system. In this embodiment, the predetermined threshold is set as 500rpm.

The first estimation model is: $T_{oil_t} = \alpha T_{oil_{t-1}} + (1 - \alpha)T_{motor}$, where $T_{oil}$ is the oil temperature estimation result, $\alpha$ is the proportionality coefficient ranging from 0 to 1, whose specific value is obtained through experimental calibration, $T_{motor}$ is the motor temperature, and $T_{oil_{t-1}}$ is the oil temperature estimation result of the previous moment. When the previous moment is the initial moment, the oil temperature estimation result $T_{oil_{t-1}}$ of the previous moment is the ambient temperature.

As illustrated in FIG. 2, the first estimation model is constructed by the following steps.

S11, determine several test operation conditions for the oil-cooled electric drive system.

S12, mount an oil temperature sensor in the oil circuit of the oil-cooled electric drive system, control the electronic oil pump not to operate, and operate the oil-cooled electric drive system according to the test operation conditions, and continuously record data during operation, the data including the motor temperature, the oil temperature estimation result of the previous moment, and oil temperature information acquired by the oil temperature sensor.

S13, repeat the step S12 until data recording under all test operation conditions is completed.

S 14, construct a fitted regression model with taking the motor temperature and the oil temperature estimation result of the previous moment as inputs and taking the oil temperature information acquired by the oil temperature sensor as output, to obtain the first estimation model.

For example, three operation conditions for the oil-cooled electric drive system are determined. Condition 1 is a no-load operation condition, Condition 2 is a rated operation condition, and Condition 3 is a peak operation condition. Based on the measured motor temperature, the oil temperature estimation result of the previous moment, and a curve fitting corresponding to the oil temperature, the proportionality coefficient $\alpha$ is determined as 0.5. Therefore, the first estimation model is given by: $T_{oil} = 0.5T_{oil_{t-1}} + 0.5T_{motor}$. When the rotation speed of the oil pump is smaller than the predetermined threshold, the obtained motor temperature $T_{motor}$ in real time and the obtained oil temperature estimation result $T_{oil_{t-1}}$ of the previous moment are inputted into the first estimation model constructed based on the heat transfer model, to obtain the oil temperature estimation result of the oil-cooled electric drive system, resulting in an accurate and reliable result. Based on the oil temperature estimation result, the oil temperature of the oil-cooled electric drive system is regulated to ensure efficient and reliable operation of the oil-cooled electric drive system and to effectively avoid both an excessively low oil temperature and a high oil temperature. When the oil temperature is too low, a significant increase in viscosity of oil may occur, leading to increased friction losses in mechanical components, which in turn reduces an efficiency of the oil-cooled electric drive system. When the oil temperature is too high, a cooling effect may be reduced, which can lead to an over-temperature of internal components of the oil-cooled electric drive system, and more seriously, lead to over-temperature damage of the components.

Third Embodiment: an oil temperature estimation method for the oil-cooled electric drive system is provided. The method includes: obtaining the rotation speed of the oil pump in real time. When the rotation speed of the oil pump is smaller than the predetermined threshold, the motor temperature and the oil temperature estimation result of the previous moment in real time are obtained and the obtained motor temperature and the obtained oil temperature estimation result of the previous moment are inputted into the first estimation model constructed based on the heat transfer model, to obtain the oil temperature estimation result of the oil-cooled electric drive system. When the rotation speed of the oil pump is greater than or equal to the predetermined threshold, the voltage of the oil pump and the current of the oil pump are obtained in real time and the obtained voltage of the oil pump, the obtained current of the oil pump, and the rotation speed of the oil pump are inputted into the second estimation model constructed based on the operation performance of the oil pump and the flow resistance characteristics of the oil circuit, to obtain the oil temperature estimation result of the oil-cooled electric drive system. In this embodiment, the predetermined threshold is set as 500rpm.

The second estimation model is: $T_{oil} = f(X_1, X_2)$ , $X_1 = f(n, n_{ref})$ , and $X_2 = f(n, U, I, \beta)$ , where $T_{oil}$ is the oil temperature estimation result, $X_1$ is a first input variable, $X_2$ is a second input variable, $n$ is a real-time rotation speed of the oil pump, $n_{ref}$ is a reference rotation speed of the oil pump which is reasonably set as desired, $U$ is the voltage of the oil pump, $I$ is the current of the oil pump, and $\beta$ is a calibration correction factor. The calculation formula for the first input variable is: $$X_1 = f(n, n_{ref}) = \frac{n}{n_{ref}}$$ . The calculation formula for the second input variable is: $$X_2 = f(n, U, I, \beta) = \frac{U * I}{n^{\beta}}$$ .

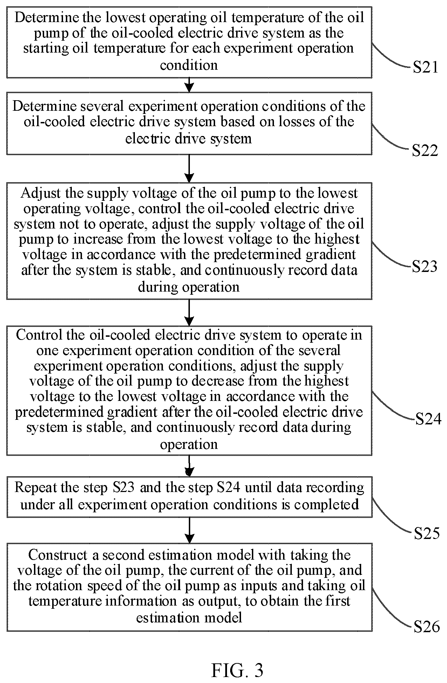

As illustrated in FIG. 3, the second estimation model is constructed by the following steps.

S21, determine the lowest operating oil temperature of the oil pump of the oil-cooled electric drive system as the starting oil temperature for each experiment operation condition; Based on a rotational speed control range of the oil pump of the oil-cooled electric drive system, calibration operation condition of the rotational speed of the oil pump is set, for example, sequentially increasing speeds of $n_0, n_1, n_2, ..., n_{max}$, where $n_0$ is greater than or equal to the predetermined threshold.

S22, determine several experiment operation conditions of the oil-cooled electric drive system based on losses of the electric drive system, at least one of the several experiment operation conditions including a maximum loss point of the oil-cooled electric drive system in continuous operation.

S23, adjust the supply voltage of the oil pump to the lowest operating voltage, request the rotation speed of the oil pump to be a predetermined rotation speed $n_0$, control the oil-cooled electric drive system not to operate, adjust the supply voltage of the oil pump to increase from the lowest voltage to the highest voltage in accordance with the predetermined gradient after the system is stable, and continuously record data during operation, the data including the voltage of the oil pump, the current of the oil pump, the rotation speed of the oil pump, and an oil temperature acquired by the oil temperature sensor.

S24, control the oil-cooled electric drive system to operate in one experiment operation condition of the several experiment operation conditions, adjust the supply voltage of the oil pump to decrease from the highest voltage to the lowest voltage in accordance with the predetermined gradient after the oil-cooled electric drive system is stable, and continuously record data during operation, the data including the voltage of the oil pump, the current of the oil pump, the rotation speed of the oil pump, and the oil temperature acquired by the oil temperature sensor.

S25, repeat the step S23 and the step S24 until data recording under all experiment operation conditions is completed when the rotational speed of the oil pump is the lowest operation rotation speed of the oil pump.

Then, the oil-cooled electric drive system is allowed to stand until the oil temperature decreases to the starting oil temperature described in S1, and the rotation speed of the oil pump is requested to be $n_1$. The Steps from S23 to S25 are repeated until when the rotation speed of the oil pump is $n_1$, data recording under all experiment operation conditions is completed.

The above operations are repeated until data recording under all experiment operation conditions and all rotation speeds of the oil pump is completed. As shown in Table 1, oil temperature data measured under different rotation speeds of the oil pump, voltages of the oil pump, and currents of the oil pump under some operation conditions are given.

**EP 4 564 217 A1**

Table 1: Oil temperature data measured under different rotation speeds of the oil pump, voltages of the oil pump, and currents of the oil pump

| Serial numbers | Rotation speeds of the oil pump (rpm) | Voltages of the oil pump (V) | Currents of the oil pump (A) | Oil Temperatures (°C) |
|---|---|---|---|---|
| 1 | $n_0 = 1000$ | $U_0 = 9$ | 0.8 | 60 |
| 2 | $n_0 = 1000$ | $U_1 = 12$ | 0.6 | 60 |
| 3 | $n_0 = 1000$ | $U_2 = 16$ | 0.4 | 60 |
| ... | ... | ... | ... | ... |
| ... | $n_k = 3000$ | $U_0 = 9$ | 1.9 | 80 |
| ... | $n_k = 3000$ | $U_1 = 12$ | 1.4 | 80 |
| ... | $n_k = 3000$ | $U_2 = 16$ | 1.1 | 80 |
| ... | ... | ... | ... | ... |
| ... | $n_{max} = 6500$ | $U_2 = 16$ | 7.0 | 95 |
| ... | $n_{max} = 6500$ | $U_1 = 12$ | 9.4 | 95 |
| ... | $n_{max} = 6500$ | $U_0 = 9$ | 12.5 | 95 |

S26, construct a fitted regression model with taking the voltage of the oil pump, the current of the oil pump, and the rotation speed of the oil pump as inputs and taking oil temperature information acquired by the oil temperature sensor as an output, to obtain the second estimation model. In particular, the first input variable $X_1$ is calculated through

$$X_1 = f(n, n_{ref}) = \frac{n}{n_{ref}}$$ , the second input variable $X_2$ is calculated through $$X_2 = f(n, U, I, \beta) = \frac{U*I}{n^\beta}$$ .

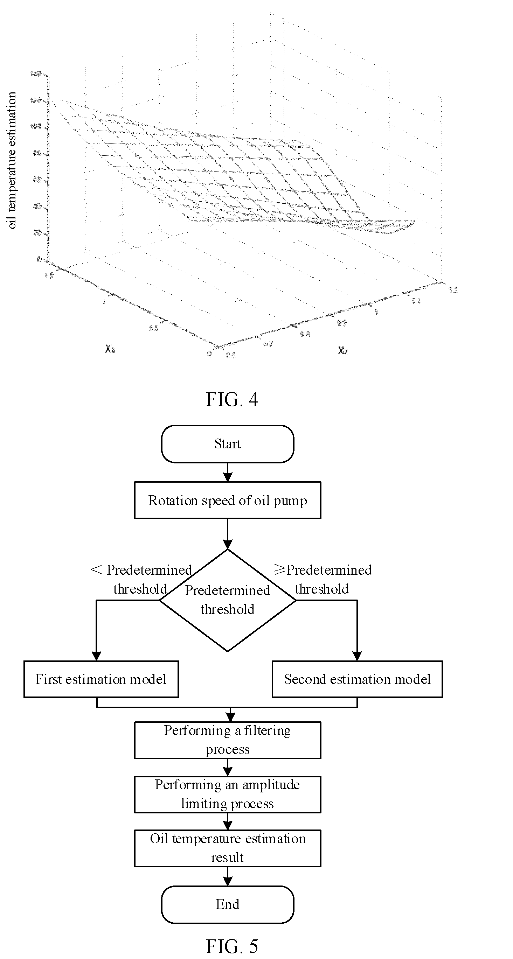

As illustrated in FIG. 4, based on the obtained $X_1$ , $X_2$ , and the data corresponding to the oil temperature, the fitted regression model is constructed, to obtain the second estimation model.

Fourth Embodiment: as illustrated in FIG. 5, the oil temperature estimation method for the oil-cooled electric drive system is provided. The method includes: obtain the rotation speed of the oil pump in real time. When the rotation speed of the oil pump is smaller than the predetermined threshold, the motor temperature and the oil temperature estimation result of the previous moment in real time are obtained and the obtained motor temperature and the obtained oil temperature estimation result of the previous moment are inputted into the first estimation model constructed based on the heat transfer model, to obtain the oil temperature estimation result of the oil-cooled electric drive system. When the rotation speed of the oil pump is greater than or equal to the predetermined threshold, the voltage of the oil pump and the current of the oil pump are obtained in real time and the obtained voltage of the oil pump, the obtained current of the oil pump, and the rotation speed of the oil pump are inputted into the second estimation model constructed based on the operation performance of the oil pump and the flow resistance characteristics of the oil circuit, to obtain the oil temperature estimation result of the oil-cooled electric drive system. In this embodiment, the predetermined threshold is set as 500rpm.

The first estimation model is: $T_{oil_t} = \alpha T_{oil_{t-1}} + (1 - \alpha)T_{motor}$ , where $T_{oil}$ is the oil temperature estimation result, $\alpha$ is the proportionality coefficient ranging from 0 to 1, whose specific value is obtained through experimental calibration, $T_{motor}$ is the motor temperature, and $T_{oil_{t-1}}$ is the oil temperature estimation result of the previous moment. When the previous moment is the initial moment, the oil temperature estimation result $T_{oil_{t-1}}$ of the previous moment is the ambient temperature.

The second estimation model is: $T_{oil} = f(X_1, X_2)$ , $X_1 = f(n, n_{ref})$ , and $X_2 = f(n, U, I, \beta)$ , where $T_{oil}$ is the oil temperature estimation result, $X_1$ is a first input variable, $X_2$ is a second input variable, $n$ is a real-time rotation speed of the oil pump, $n_{ref}$ is a reference rotation speed of the oil pump which is reasonably set as desired, $U$ is the voltage of the oil pump, $I$ is the current of the oil pump, and $\beta$ is a calibration correction factor. The calculation formula for the first input variable is:

$$X_1 = f(n, n_{ref}) = \frac{n}{n_{ref}}$$ . The calculation formula for the second input variable is:

$$X_2 = f(n, U, I, \beta) = \frac{U*I}{n^\beta}$$ .

To reduce an influence of input signal fluctuation on the estimation result, a filtering process and an amplitude limiting process are performed on the obtained oil temperature estimation result of the oil-cooled electric drive system. The filtering processing outputs once every $m$ calculation cycles. The outputted value is an average value of estimation results

8

in the $m$ cycles. This can be specifically expressed as: $$Y = \frac{Y_1 + Y_2 + \cdots + Y_m}{m}$$ , where $Y$ is an oil temperature estimation result outputted after filtering processing, $Y_1$ is an oil temperature estimation result outputted for a first calculation cycle, $Y_2$ is an oil temperature estimation result outputted for a second calculation cycle, $Y_m$ is an oil temperature estimation result outputted for a m-th calculation cycle, $m$ is a total number of calculation cycles.

An amplitude limiting coefficient for the amplitude limiting processing is obtained through testing.

Fifth Embodiment: an oil temperature estimation apparatus for an oil-cooled electric drive system is provided, being capable of performing the oil temperature estimation method according to the first embodiment, the second embodiment, the third embodiment, or the fourth embodiment. The apparatus includes: an information obtaining module configured to obtain parameter information, the parameter information including the rotation speed of the oil pump, the voltage of the oil pump, the current of the oil pump, the motor temperature, and the oil temperature estimation result of the previous moment; and an information processing module configured to calculate, based on the parameter information obtained by the information obtaining module, the oil temperature estimation result of the oil-cooled electric drive system based on the predetermined first estimation model or the predetermined second estimation model.

Sixth Embodiment: a vehicle is provided according to the present disclosure. The vehicle includes an oil-cooled electric drive system. The oil-cooled electric drive system includes the oil temperature estimation apparatus for the oil-cooled electric drive system according to the fifth embodiment of the present disclosure.

Seventh Embodiment: a storage medium is provided according to the present disclosure. The storage medium has a computer-readable program stored therein. The computer-readable program is capable of, when invoked, implementing the oil temperature estimation method for the oil-cooled electric drive system according to the first embodiment, the second embodiment, the third embodiment, or the fourth embodiment.

It should be noted that the storage medium shown may be a computer-readable signal medium, a computer-readable storage medium, or any combination thereof. The computer-readable storage medium may be, for example, an electrical, magnetic, optical, electromagnetic, infrared, or semiconductor system, apparatus, or device, or any combination thereof. More specific examples of computer-readable storage media may include, but are not limited to, electrical connections having one or more wires, a portable computer magnetic disk, a hard disk, a random access memory (RAM), a read-only memory (ROM), an Erasable Programmable Read Only Memory (EPROM), a flash memory, an optical fiber, a portable Compact Disc Read-Only Memory (CD-ROM), an optical storage device, a magnetic storage device, or any suitable combination thereof. In this embodiment, the computer-readable signal medium may include a data signal propagated in a baseband or as part of a carrier wave in which a computer-readable computer program is carried. Such propagated data signals may take a variety of forms, including, but not being limited to, electromagnetic signals, optical signals, or any suitable combination of the foregoing. The computer-readable signal medium may also be any computer-readable medium other than the computer-readable storage medium that can transmit, propagate, or transport a program for use by or in connection with an instruction execution system, an apparatus, or a device. A computer program contained on the computer-readable medium may be transmitted using any suitable medium, including, but not being limited to, a wireless method, a wired method, or any suitable combination thereof.

Flowcharts and block diagrams in the drawings illustrate architecture, functionality, and operations of possible implementations of systems, methods, and computer program products in accordance with various embodiments of the present disclosure. Each block in the flowchart or the block diagram may represent a module, a program segment, or portion of a code that contains one or more executable instructions for implementing a specified logical function. It should also be noted that in some alternative implementations, the functions noted in the blocks may also occur in a different order than those noted in the drawings. For example, two connected representations of blocks may actually be executed substantially in parallel. Sometimes, they may be executed in a reverse order, depending on the function involved. It should also be noted that each block in the block diagrams or the flowcharts, and combinations of blocks in the block diagrams or the flowcharts may be implemented with a dedicated hardware-based system that performs specified functions or operations, or may be implemented with a combination of dedicated hardware and computer instruction.

The above embodiments are merely preferred embodiments for fully illustrating the present disclosure, and the scope of protection of the present disclosure is not limited thereto. Equivalent substitutions or changes made by those skilled in the art on the basis of the present disclosure are within the scope of protection of the present disclosure.

## Claims

1. An oil temperature estimation method for an oil-cooled electric drive system, comprising:

   obtaining a rotation speed of an oil pump in real time,
   when the rotation speed of the oil pump is smaller than a predetermined threshold, obtaining a motor temperature and an oil temperature estimation result of a previous moment in real time and inputting the obtained motor temperature and the obtained oil temperature estimation result of the previous moment into a first estimation model constructed based on a heat transfer model, to obtain an oil temperature estimation result of the oil-cooled electric drive system; and

when the rotation speed of the oil pump is greater than or equal to the predetermined threshold, obtaining a voltage of the oil pump and a current of the oil pump in real time and inputting the obtained voltage of the oil pump, the obtained current of the oil pump, and the rotation speed of the oil pump into a second estimation model constructed based on operation performance of the oil pump and flow resistance characteristics of an oil circuit, to obtain the oil temperature estimation result of the oil-cooled electric drive system.

2. The oil temperature estimation method according to claim 1, wherein the first estimation model is: $T_{oil_t} = \alpha T_{oil_{t-1}} + (1 - \alpha) T_{motor}$, where $T_{oil_t}$ is the oil temperature estimation result at a current moment $t$, $\alpha$ is a proportionality coefficient ranging from 0 to 1, $T_{motor}$ is the motor temperature, and $T_{oil_{t-1}}$ is the oil temperature estimation result of the previous moment, when the previous moment is an initial moment, the oil temperature estimation result $T_{oil_{t-1}}$ of the previous moment is an ambient temperature.

3. The oil temperature estimation method according to claim 2, wherein the proportionality coefficient $\alpha$ is obtained through experimental calibration.

4. The oil temperature estimation method according to claim 1, wherein the second estimation model is: $T_{oil} = f(X_1, X_2)$, $X_1 = f(n, n_{ref})$, and $X_2 = f(n, U, I, \beta)$, where $T_{oil}$ is the oil temperature estimation result, $X_1$ is a first input variable, $X_2$ is a second input variable, $n$ is a real-time rotation speed of the oil pump, $n_{ref}$ is a reference rotation speed of the oil pump which is reasonably set as desired, $U$ is the voltage of the oil pump, $I$ is the current of the oil pump, and $\beta$ is a calibration correction factor.

5. The oil temperature estimation method according to claim 4, wherein a calculation formula for the first input variable is:

$$X_1 = f(n, n_{ref}) = \frac{n}{n_{ref}}.$$

6. The oil temperature estimation method according to claim 4, wherein a calculation formula for the second input variable is: $X_2 = f(n, U, I, \beta) = \frac{U*I}{n^\beta}.$

7. The oil temperature estimation method according to claim 1, further comprising:
performing a filtering process and an amplitude limiting process on the obtained oil temperature estimation result of the oil-cooled electric drive system, wherein the filtering processing outputs once every $m$ calculation cycles, the outputted value being an average value of estimation results in the $m$ cycles; and wherein an amplitude limiting coefficient for the amplitude limiting processing is obtained through testing.

8. The oil temperature estimation method according to claim 1, wherein the first estimation model is constructed by:

S11, determining several test operation conditions for the oil-cooled electric drive system;
S12, mounting an oil temperature sensor in the oil circuit of the oil-cooled electric drive system, and operating the oil-cooled electric drive system according to the test operation conditions, and continuously recording data during operation, the data comprising the motor temperature, the oil temperature estimation result of the previous moment, and oil temperature information acquired by the oil temperature sensor;
S13, repeating the step S12 until data recording under all test operation conditions is completed; and
S14, constructing a fitted regression model with taking the motor temperature and the oil temperature estimation result of the previous moment as inputs and taking the oil temperature information acquired by the oil temperature sensor as output, to obtain the first estimation model.

9. The oil temperature estimation method according to claim 1, wherein the second estimation model is constructed by:

S21, determining a lowest operating oil temperature of the oil pump of the oil-cooled electric drive system as a starting oil temperature for each experiment operation condition;
S22, determining several experiment operation conditions of the oil-cooled electric drive system based on losses of the electric drive system, at least one of the several experiment operation conditions comprising a maximum loss point of the oil-cooled electric drive system in continuous operation;

S23, adjusting an supply voltage of the oil pump to a lowest operating voltage, requesting the rotation speed of the oil pump to be a predetermined rotation speed, controlling the oil-cooled electric drive system not to operate, adjusting the supply voltage of the oil pump to increase from a lowest voltage to a highest voltage in accordance with a predetermined gradient after the system is stable, and continuously recording data during operation, the data comprising the voltage of the oil pump, the current of the oil pump, the rotation speed of the oil pump, and an oil temperature acquired by the oil temperature sensor;

S24, controlling the oil-cooled electric drive system to operate in one experiment operation condition of the several experiment operation conditions, adjusting the supply voltage of the oil pump to decrease from the highest voltage to the lowest voltage in accordance with the predetermined gradient after the oil-cooled electric drive system is stable, and continuously recording data during operation, the data comprising the voltage of the oil pump, the current of the oil pump, the rotation speed of the oil pump, and the oil temperature acquired by the oil temperature sensor;

S25, repeating the step S23 and the step S24 until data recording under all experiment operation conditions is completed; and

S26, constructing a fitted regression model with taking the voltage of the oil pump, the current of the oil pump, and the rotation speed of the oil pump as inputs and taking oil temperature information acquired by the oil temperature sensor as an output, to obtain the second estimation model.

10. An oil temperature estimation apparatus for an oil-cooled electric drive system, wherein the oil temperature estimation apparatus is capable of performing the oil temperature estimation method according to any one of claims 1 to 9, the oil temperature estimation apparatus comprising:

an information obtaining module configured to obtain parameter information, the parameter information comprising the rotation speed of the oil pump, the voltage of the oil pump, the current of the oil pump, the motor temperature, and the oil temperature estimation result of the previous moment; and

an information processing module configured to calculate, based on the parameter information obtained by the information obtaining module, the oil temperature estimation result of the oil-cooled electric drive system based on the predetermined first estimation model or the predetermined second estimation model.

11. A vehicle, comprising an oil-cooled electric drive system, wherein the oil-cooled electric drive system comprises the oil temperature estimation apparatus according to claim 10.

12. A storage medium, having a computer-readable program stored therein, wherein the computer-readable program is capable of, when invoked, implementing the oil temperature estimation method according to any one of claims 1 to 9.

```
                        ┌──────────────┐
                        │    Start      │
                        └──────┬───────┘
                               │
                               ▼
                    ┌─────────────────────────┐
                    │  Rotation speed of oil pump │
                    └────────────┬────────────┘
                                 │
                                 ▼
        < Predetermined      ◇◇◇◇◇◇◇◇      ≥ Predetermined
          threshold      Predetermined      threshold
                           threshold
                ┌────────────────┐       ┌────────────────┐
                │ First estimation │       │ Second estimation │
                │     model        │       │     model         │
                └────────┬────────┘       └────────┬────────┘
                         │                         │
                         ▼                         ▼
                    ┌─────────────────────────┐
                    │  Oil temperature estimation │
                    │          result            │
                    └────────────┬────────────┘
                                 ▼
                        ┌──────────────┐
                        │     End       │
                        └──────────────┘
```

FIG. 1

Determine several test operation conditions for the oil-cooled electric drive system ~S11

Mount an oil temperature sensor, operate according to the test operation conditions, and continuously record data during operation ~S12

Repeat the step S12 until data recording under all test operation conditions is completed ~S13

Construct a first estimation model with taking an ambient temperature and an oil pump motor temperature as inputs and taking the oil temperature information as output, to obtain the first estimation model ~S14

FIG. 2

Determine the lowest operating oil temperature of the oil pump of the oil-cooled electric drive system as the starting oil temperature for each experiment operation condition —— S21

Determine several experiment operation conditions of the oil-cooled electric drive system based on losses of the electric drive system —— S22

Adjust the supply voltage of the oil pump to the lowest operating voltage, control the oil-cooled electric drive system not to operate, adjust the supply voltage of the oil pump to increase from the lowest voltage to the highest voltage in accordance with the predetermined gradient after the system is stable, and continuously record data during operation —— S23

Control the oil-cooled electric drive system to operate in one experiment operation condition of the several experiment operation conditions, adjust the supply voltage of the oil pump to decrease from the highest voltage to the lowest voltage in accordance with the predetermined gradient after the oil-cooled electric drive system is stable, and continuously record data during operation —— S24

Repeat the step S23 and the step S24 until data recording under all experiment operation conditions is completed —— S25

Construct a second estimation model with taking the voltage of the oil pump, the current of the oil pump, and the rotation speed of the oil pump as inputs and taking oil temperature information as output, to obtain the first estimation model —— S26

FIG. 3

FIG. 4

FIG. 5

## INTERNATIONAL SEARCH REPORT

| | International application No. |
|---|---|
| | **PCT/CN2023/120813** |

| A. | CLASSIFICATION OF SUBJECT MATTER |
|---|---|

G06F 30/20(2020.01)i

According to International Patent Classification (IPC) or to both national classification and IPC

| B. | FIELDS SEARCHED |
|---|---|

Minimum documentation searched (classification system followed by classification symbols)

IPC: G06F F01P F01M F04B

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, ENTXT, USTXT, CNKI, IEEE: 变速箱, 传热, 阀值, 阈值, 工况, 工作情况, 工作状态, 估计, 估算, 换热, 模型, 区间, 热传, 热循环, 润滑油, 油泵, 油温, gear box, heat, threshold, estimate, exchange, model, lubrication, voltage, oil temperature, oil pump

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116502444 A (DEEPAL AUTOMOBILE TECHNOLOGY CO., LTD.) 28 July 2023 (2023-07-28)<br>claims 1-12 | 1-12 |
| A | JP 2010071157 A (MITSUBISHI MOTOR CORP.) 02 April 2010 (2010-04-02)<br>description, paragraphs 13-81, and figures 1-4 | 1-12 |
| A | CN 114962607 A (CHINA FAW CO., LTD.) 30 August 2022 (2022-08-30)<br>entire document | 1-12 |
| A | CN 113623050 A (ANHUI JIANGHUAI AUTOMOBILE GROUP CO., LTD.) 09 November 2021 (2021-11-09)<br>entire document | 1-12 |
| A | JP 2006274900 A (FUJI HEAVY INDUSTRIES LTD.) 12 October 2006 (2006-10-12)<br>entire document | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/120813**

| Patent document cited in search report | | | Publication date (day/month/year) | Patent family member(s) | | | Publication date (day/month/year) |
|---|---|---|---|---|---|---|---|
| CN | 116502444 | A | 28 July 2023 | None | | | |
| JP | 2010071157 | A | 02 April 2010 | JP | 4737256 | B2 | 27 July 2011 |
| CN | 114962607 | A | 30 August 2022 | None | | | |
| CN | 113623050 | A | 09 November 2021 | None | | | |
| JP | 2006274900 | A | 12 October 2006 | JP | 4611784 | B2 | 12 January 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310478065
- CN 202011374193

- CN 202010511132